Europäisches Patentamt

European Patent Office

Office européen des brevets

(11) Publication number: **0 046 015**
**B1**

(12) **EUROPEAN PATENT SPECIFICATION**

(45) Date of publication of patent specification: **21.08.85**

(51) Int. Cl.⁴: **B 01 D 13/01,** B 29 C 39/08

(21) Application number: **81303230.7**

(22) Date of filing: **14.07.81**

(54) **Method for impregnating the end of a rigid tubular bundle of hollow separatory fibres with potting compound and subsequently opening the ends of the hollow fibres within the potting compound.**

(30) Priority: **11.08.80 US 177198**

(43) Date of publication of application:
**17.02.82 Bulletin 82/07**

(45) Publication of the grant of the patent:
**21.08.85 Bulletin 85/34**

(84) Designated Contracting States:
**AT BE CH DE FR GB IT LI LU NL**

(56) References cited:
**FR-A-2 309 263**
**FR-A-2 344 262**
**FR-A-2 358 910**
**GB-A-1 380 393**
**US-A-3 492 698**
**US-A-4 179 380**

(73) Proprietor: **ALBANY INTERNATIONAL CORP.**
**1 Sage Road**
**Menards New York 12201 (US)**

(72) Inventor: **Schiffer, Daniel K.**
**66 Berry Street**
**Framingham Massachusetts 01701 (US)**
Inventor: **Coplan, Myron J.**
**47 Speen Street**
**Natick Massachusetts 01760 (US)**
Inventor: **Bilewski, Friedhelm**
**13 Oak Street**
**Medway Massachusetts 02053 (US)**

(74) Representative: **Jennings, Roy Alfred et al**
**GILL JENNINGS & EVERY 53-64 Chancery Lane**
**London WC2A 1HN (GB)**

Courier Press, Leamington Spa, England.

## Description

The use of membranes to effect separation of gas/gas, liquid/liquid, and liquid/solid mixtures and solutions has achieved general industrial applicability by various methods, among them being ultrafiltration, hyperfiltration, reverse osmosis and dialysis. In general, membranes used in these methods are contained in vessels called modules which comprise a container having various inlet and outlet ports and an assembly of membranes within the container. The internal arrangements of the modules are such as to permit the introduction of a feed stream either under pressure or not on the upstream faces of the membranes and means are provided for collecting permeate which passes through the membranes and emerges on their downstream faces. Means are also, of course, provided for keeping the feed stream and the permeate from commingling.

Membranes have been fabricated in various shapes, such as (1) flat sheets which may be supported in a plate and frame structure similar to a filter press; (2) initially flat sheets which are rolled into spirals with spacing materials interleaved with the membrane and the assembly being sealed to provide spiroidal channels permitting the passage of a feed on one side of the rolled membrane through spaces to the opposite side of the membrane; (3) tubes which line the inner surface of a reinforced braid, the braid itself sometimes being a component in a larger tube; and (4) in the form of open-ended hollow fibres so arranged and sealed into header plates as to provide a separation of the flow over the external surfaces of the hollow fibres from flows within the bores of the hollow-fibres which ensue by virtue of the passage of permeant through the membranes which forms the walls of the hollow fibres.

Of particular interest is the use of hollow fibres assembled in a modular form to provide the desired separation.

In our European Patent Application No. 79301885.4 which was published on 2nd April 1980 (Publication No. 0,009,374), various techniques for the selection and winding of hollow fibres and the fabrication and assembly of such fibres into modular form are described. It is noted that a significant consideration in this work is the manner and means of terminating the hollow tubular bundle of fibres so that the ends of the fibres can be opened to allow for the recovery of the permeate from within the hollow fibres and at the same time provide suitable support for the fibres to resist the thrust forces developed by the internal pressures within the module in which the fibres are contained. In the above Application, the use of potting compound solidified around the ends of the fibres is described and slices are taken through the potting compound to expose the fibre bores while providing adequate support to resist internal pressure. The provision of recesses of suitable configuration and position in the potting compound within which the fibre ends are disposed is illustrated.

It has been found however that in order to achieve satisfactory termination of the fibres it is necessary that the end of the hollow tubular bundle of fibres at which the slices are to be taken must be thoroughly impregnated with potting compound in a substantially uniform manner and mere immersion of the end of the bundle in potting compound or spraying of the end of the bundle with potting compound will not achieve uniform void free potting and encapsulation of all the fibres.

In US—A—4 179 380 a bundle of fibres, all of which extend substantially axially so that the bundle is not rigid, are held between a mandrel and a surrounding housing. A seal is formed at each end of the bundle between the fibres themselves and between the fibres and the mandrel and the housing. Each seal is formed in situ between the mandrel and the housing by injecting potting compound in a liquid state into the space between the mandrel and the housing and then spinning the housing with the bundle and the mandrel inside it. Spinning continues until the compound has hardened.

Before the seals of potting compound are formed it is necessary to provide end closures to support the bundle between the mandrel and housing and these end closures each consist of an adjesive coated ribbon wound in such a way as to permit the interleaving of hollow fibre segments between successive turns of the ribbon. Thus essentially the end seals of the fibre bundle are formed by the combination of the ribbon and the potting compound.

Where as described in EP—A—0 009 374 the bundle is rigid and tubular with a bore which forms a free space, it is necessary to form an end seal from potting compound alone to enable the slices to be taken through the potting compound to expose the fibre bores while still providing adequate support to resist internal pressure. The technique described in US—A—4 179 380 cannot therefore be used.

The object of the present invention is to provide a method of impregnating with potting compound the end of a rigid tubular bundle of hollow separatory fibres, for example as described in EP—A—0 009 374 and subseqeuntly opening the ends of the hollow fibres within the potting compound to allow for the recovery of permeate from within the hollow fibres.

According to this invention, such a method comprises mounting the lower end of the bundle within a mould with the axis of the bundle generally vertical and with the upper parts of the bundle projecting upwards out of the mould, introducing potting compound into the lower end of the bore of the tubular bundle within the mould to a desired height while rotating the bundle about a generally vertical axis parallel to the axis of the fibre bundle, regulating the speed of rotation to control the radially outward movement of the potting compound in the absence of means, other than the mould at the lower end of the bundle, to restrain the fibres of the bundle from radial displacement during the rotation of the bundle, and thereafter stopping the rotation, allowing the impregnated end of the bundle to remain within the mould until a desired cure of the potting compound is reached, removing the bundle with its impregnated lower end from the mould and then slicing through the lower ends of the fibres and through the impregnating potting compound to expose the bores of the fibres in the potting compound.

An example of a method in accordance with the invention will now be described with reference to the accompanying drawings in which:—

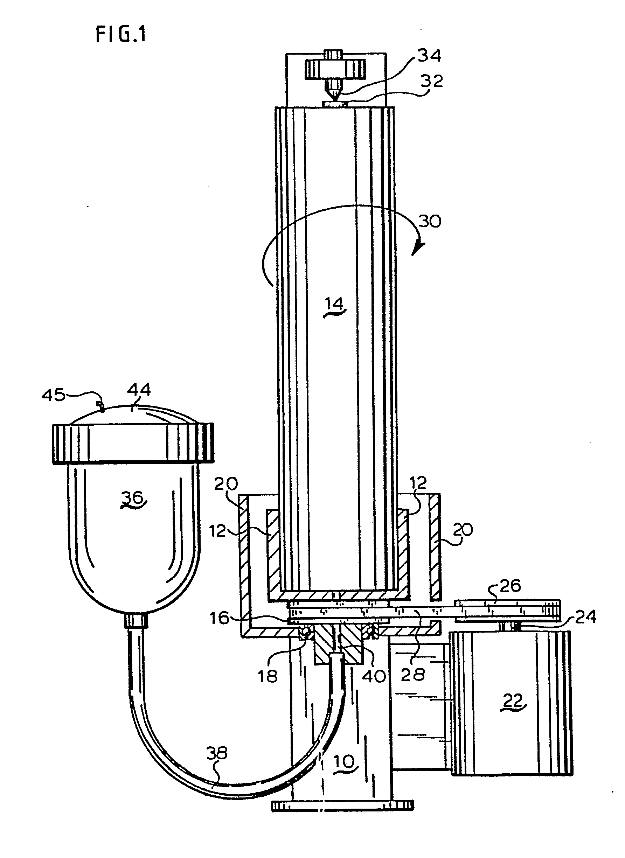

Figure 1 is a partly sectional side view of apparatus for carrying out the method with a bundle of fibres ready for impregnation therein;

Figure 2 is a partially sectional detail of part of the apparatus to a larger scale illustrating the build up of potting compound during impregnation; and,

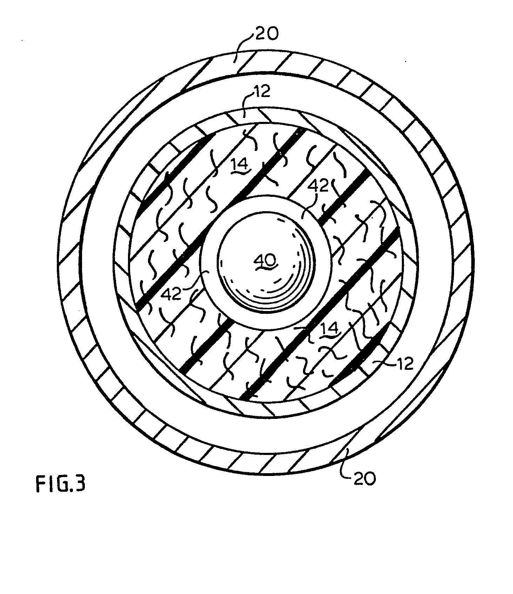

Figure 3 is a sectional plan view in the direction of the arrows on the line 3—3 in Figure 2.

As shown in the drawings, the apparatus comprises a base 10, a bundle potting mould 12, in which the lower end of a hollow tubular bundle of fibres 14, is in use, supported, a pulley 16 and a bearing 18 allowing for rotation of the mould 12 and the bundle 14 relative to the base. The base 10 also supports a cylindrical shield 20, which is concentric with the mould 12 and is spaced therefrom, and a variable speed electric motor 22, a shaft 24 of which drives a pulley 26, which in turn rotates the pulley 16 and the mould 12 by means of a drive belt 28.

When the motor 22 is energized, the bundle 14 is rotated with the mould 12 about its axis in the direction of an arrow 30. A rigid shaft 32 within the bundle 14, and bearing 34 support the upper end of the bundle during rotation. If the bundle 14 is sufficiently self-supporting the shaft 32 may not be necessary and a cap or plug member can be used to support the top of the bundle 14 from the bearing 34 in the illustrated example of the apparatus. However it should be understood that the bearing 34 is shown as an example only and other suitable means for maintaining the position of the bundle may be utilized.

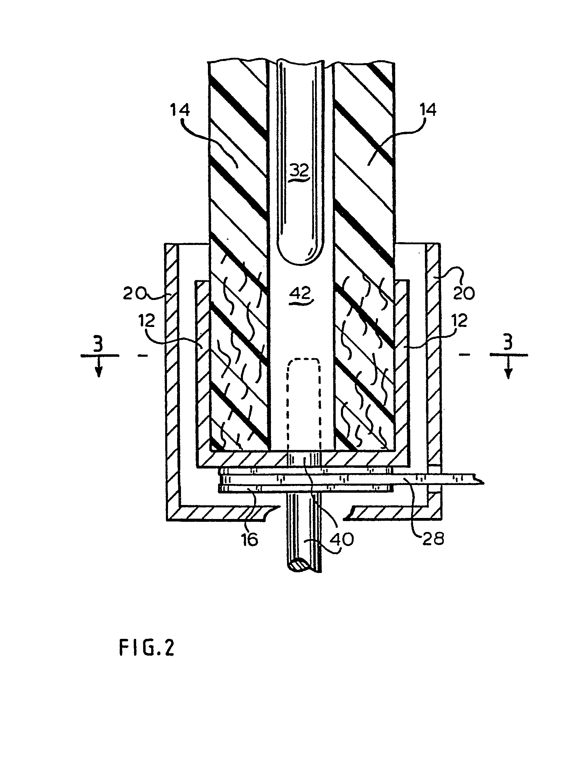

A reservoir 36 is supported adjacent the base 10 and is connected by means of a hose 38 to a conduit 40 which allows for passage of potting compound, for example epoxy resin, from the reservoir into the bore 42 (see Figure 2) of the bundle 14 up to a desired height. Pressure is applied in the upper part 44 of the reservoir 36 by means of a gas inlet 45 to force resin into the mould 12. The shield 20 is provided for protection against any potting compound which might be thrown centrifugally out of the mould 12 during impregnation.

In operation, the motor 22 is energized and the mould 12 and the bundle 14 are rotated about their upright axes as resin is fed through the conduit 40 and into the bore 42 of the bundle 14. The bundle is spun about the upright axis and the potting compound is spun radially outwardly by centrifugal force. If it is found necessary to ensure void-free impregnation, the speed of rotation of the mould 12 may be changed during impregnation. As the potting compound moves outwardly, it displaces air in the interstices between the fibres and fills the mould. As the potting compound appears to leave the top of the mould, spinning is stopped and the bundle is allowed to sit in the mould until the desired cure of the potting compound is reached. After spinning has stopped, the mould and the fibre bundle can be removed from the base, thus allowing a new mould and fibre bundle to be installed and impregnated before the previous potting compound has reached the desired cure.

Typical examples for 50 mm and 75 mm external diameter bundles of 0.25 mm external diameter hollow fibres are:

Potting compound: 25% talc filled bis-phenol-A epoxy resin cured with a mixed amine:

|  | 50 mm dia. bundle. | 75 mm dia bundle. |
| --- | --- | --- |
| Initial resin viscosity | 7.5 Ns/m$^2$ | 7.5 Ns/m$^2$ |
| Pressure on potting compound | 31 kN/m$^2$ | 31 kN/m$^2$ |
| Rotation Speed | 650 rpm | 760 rpm |
| Time to fill mould | 10—20 min. | 15—20 min. |
| Initial Resin Temperature | 25°—30°C | 25°—30°C |

3

Potting compound: Unfilled bisphenol-A epoxy resin cured with a polyamido-amine.

|  | 50 mm dia. bundle. | 75 mm dia. bundle. |
|---|---|---|
| Initial resin viscosity | 5.2 Ns/m$^2$ | 5.2 Ns/m$^2$ |
| Pressure on compound | 31 kN/m$^2$ | 31 kN/m$^2$ |
| Rotation Speed | 450 rpm | 450 rpm for 2 min; 900 rpm until filled |
| Time to fill mould | 10—20 min. | 10—20 min. |
| Initial Temperature | 25°C—30°C | 25°—30°C |

Urethanes and other resins can alternatively be used as potting compounds. The time to fill the mould depends upon many variables including viscosity, cure rate, temperature, rotation speed, fibre diameter, fibre density in the bundle and thickness of the wall of the bundle. Exact operating conditions are determined experimentally.

After the potting compound has reached a desired cure, the bundle with its impregnated lower end is then removed from the mould and the lower ends of the fibres and the potting compound are sliced through to expose the bores of the fibres in the potting compound.

**Claims**

1. A method of impregnating the end of a rigid tubular bundle of hollow separatory fibres with potting compound and subsequently opening the ends of the hollow fibres within the potting compound to allow for the recovery of permeate from within the hollow fibres, and method comprising mounting the lower end of the bundle within a mould with the axis of the bundle generally vertical and with the upper parts of the bundle projecting upwards out of the mould, introducing potting compound into the lower end of the bore of the tubular bundle within the mould to a desired height while rotating the bundle about a generally vertical axis parallel to the axis of the fibre bundle, regulating the speed of rotation to control the radially outward movement of the potting compound in the absence of means, other than the mould at the lower end of the bundle, to restrain the fibres of the bundle from radial displacement during the rotation of the bundle, and thereafter stopping the rotation, allowing the impregnated end of the bundle to remain within the mould until a desired cure of the potting compound is reached, removing the bundle with its impregnated lower end from the mould and then slicing through the lower ends of the fibres and through the impregnating potting compound to expose the bores of the fibres in the potting compound.

2. A method according to Claim 1, in which the potting compound is supplied under pressure to the bore of the tubular bundle.

3. A method according to Claim 1 or Claim 2, in which the time for which the bundle is rotated is determined in part by viscosity, cure rate, and temperature of the potting compound and upon speed of rotation, fibre diameter and fibre density in the bundle.

4. A method according to any one of Claims 1 to 3, in which the mould and the bundle are removed from spinning apparatus after rotation of the bundle while curing of the potting compound takes place.

**Patentansprüche**

1. Verfahren zur Durchtränkung des Endteils eines starren Hohlfaserbündels mit einer Vergußmasse und anschließendes Öffnen der Endteile der Hohlfasern innerhalb der Vergußmasse, um das Permeat aus den Hohlfasern heraus wiederzugewinnen, dadurch gekennzeichnet, daß das Verfahren die Anbringung des unteren Endteils des Bündels innerhalb einer Form umfaßt, wobei die Achse des Bündels allgemein senkrecht ist, und wobei die oberen Teile des Bündels aus der Form nach oben herausragen, und daß die Vergußmasse in das untere Endteil der Bohrung des Hohlfaserbündels innerhalb der Form bis zu einer gewünschten Höhe eingeführt wird, während das Bündel um eine allgemein senkrechte Achse parallel zur Achse des Faserbündels gedreht wird, und wobei die Dehnungsgeschwindigkeit reguliert wird, um die radial nach außen gerichtete Bewegung der vergußmasse in Abwesenheit von anderen als der Form am unteren Endteil des Bündels zu steuern, um die Fasern des Bündels von radialer Verschiebung während der Drehung des Bündels zurückzuhalten, und woran anschließend die Drehung angehalten wird, um dem durchtränkten Ende des Bündels zu ermöglichen, daß es innerhalb der Form bleiben kann, bis die gewünschte Härtung der Vergußmasse erreicht ist, sowie Entfernung des Bündels mit seinem durch-

4

tränkten unteren Ende aus der Form, anschließendes Durchschneiden der unteren Enden der Fasern und der durchtränkten Vergußmasse, um die Bohrungen der Fasern in der Vergußmasse freizulegen.

2. Verfahren nach Anspruch 1, dadurch gekennzeichnet, daß die Vergußmasse unter Druck der Bohrung des Hohlfaserbündesl zugeführt wird.

3. Verfahren nach Anspruch 1 oder 2, dadurch gekennzeichnet, daß die Zeitspanne, die das Bündel gedreht wird, z.T. durch die Viskosität, die Härtungsgeschwindigkeit und die Temperatur der Vergußmasse, sowie nach der Drehungsgeschwindigkeit, dem Faserdurchmesser und der Faserdichte im Bündel festgelegt wird.

4. Verfahren nach irgendeinem der Ansprüche 1 bis 3, dadurch gekennzeichnet, daß die Form und das Bündel aus dem Spinnapparat nach der Drehung des Bündels entfernt werden, während die Härtung der Vergußmasse stattfindet.

**Revendications**

1. Procédé pour imprégner l'extrémité d'un faiseau tubulaire rigide de fibres creuses séparatrices par un composé d'enrobage et pour ensuite ouvrir les extrémités des fibres creuses à l'intérieur du composé d'enrobage pour permettre la récupération de perméat en provenance de l'intérieur des fibres creuses, procédé comprenant le montage de l'extrémité inférieure du faisceau à l'intérieur d'un moule, l'axe du faisceau étant généralement vertical et les parties supérieures du faisceau dépassant vers le haut hors du moule, l'introduction du composé d'enrobage dans l'extrémité inférieure du trou du faisceau tubulaire à l'intérieur du moule à la hauteur désirée tout en faisant tourner le faisceau autour d'un axe généralement vertical parallèle à l'axe du faisceau de fibres, la régulation de la vitesse de rotation pour commander le mouvement radialement externe du composé d'enrobage en l'absence de moyens autres que le moule à l'extrémité inférieure du faisceau, pour empêcher les fibres du faisceau de se déplacer radialement pendant la rotation du faisceau, et ensuite l'arrêt de la rotation, en permettant à l'extrémité imprégnée du faisceau de rester à l'intérieur du moule jusqu'à atteindre le durcissement désiré du composé d'enrobage, l'enlèvement du faisceau avec son extrémité inférieure imprégnée hors du moule et ensuite le découpage à travers les extrémités inférieures des fibres et à travers le composé d'imprégnation et d'enrobage pour exposer les trous des fibres dans le composé d'enrobage.

2. Procédé selon la revendication 1, dans lequel le composé d'enrobage est fourni sous pression au trou du faisceau tubulaire.

3. Procédé selon la revendication 1 ou la revendication 2, dans lequel le temps de rotation du faisceau est déterminé en partie par la viscosité, la vitesse de durcissement et la température du composé d'enrobage et par la vitesse de rotation, le diamètre des fibres et la densité des fibres dans le faisceau.

4. Procédé selon l'une quelconque des revendications 1 à 3, dans lequel le moule et le faisceau sont enlevés de l'appareil de centrifugation après rotation du faisceau pendant qu'a lieu le durcissement du composé d'enrobage.

5

FIG.1

FIG.2

FIG.3